# EUROPÄISCHE PATENTANMELDUNG

(11) **EP 4 105 074 A1**
(43) Veröffentlichungstag der Anmeldung: **21.12.2022**
(21) Anmeldenummer: 22169319.5
(22) Anmeldetag: 21.04.2022
(51) Int. Cl.: B60N 2/66

(54) **LORDOSEKISSEN**

(30) Priorität: 18.06.2021 DE 102021206305
(71) Anmelder: ContiTech Vibration Control GmbH, 30165 Hannover (DE)
(72) Erfinder: Wundersee, Robert, 30165 Hannover (DE)
(74) Vertreter: Continental Corporation

(57) **Zusammenfassung**

Die Erfindung betrifft ein Lordosekissen (1). Der Erfindung lag die Aufgabe zugrunde, ein Lordosekissen (1) zu schaffen, welches eine hohe Ausdehnung bei geringen Abmessungen im Grundzustand ermöglicht. Diese Aufgabe wird dadurch gelöst, dass die Außengeometrie des Lordosekissens (1) eine Abfolge von ringförmig geschlossenen, nach innen gerichteten Nuten (7, 9) und ringförmig geschlossenen, nach außen gerichteten Stegen (8) aufweist, wobei ein erster Nutenring (7) einen größeren Umfang aufweist, als ein erster Stegring (8) und folgend jeder weitere Nutring (9) einen kleineren Umfang hat, als der vorhergehende Stegring (8), sodass Nut- und Stegringe (7, 8, 9) ineinander liegen. Der Erfindung lag weiterhin die Aufgabe zugrunde, ein Verfahren zur Herstellung von eingangs geschilderten Lordosekissen (1) zu schaffen, mit dem die Geometrie des Lordosekissens (1) besonders einfach herstellbar ist. Diese Aufgabe wird dadurch gelöst, dass mittels Extrusionsblastechnik ein Kissenrohling erzeugt wird, der in ein Blaswerkzeug vorbestimmter Form eingebracht wird und in dem Blaswerkzeug durch Aufblasen eine zur Form des Blaswerkzeugs korrespondierende Außengeometrie erhält.

## Beschreibung

Die Erfindung betrifft ein Lordosekissen.

Lordosekissen zum Aufblasen sind seit langem bekannt und vielfältig im Einsatz. Im Automobilbau finden Sie in den Fahrersitzen zur Verbesserung des Komforts oder zur Vermeidung von Müdigkeit Verwendung.

Üblicherweise werden Lordosekissen aus zwei übereinandergelegten thermoplastischen Kunststofffolien durch Verschweißung miteinander hergestellt. Die Folien werden dazu in vorbestimmter Geometrie ausgestanzt und verschweißt, wobei auch ein Schlauch zum aufblasen mit angeschweißt werden muss.

Dieses Verfahren weist einige Restriktionen auf. So sind einerseits viele einzelne Prozessschritte notwendig, andererseits sind die Kissen zunächst rein flächig ausgebildet und erlangen erst durch das Aufblasen an ihrem vorgesehenen Einbauort eine dreidimensionale Form.

In der DE 10 2016 220 104 A1 ist ein derartiges Lordosekissen offenbart. Die Ausdehnungsfähigkeit derartiger Luftkissen ist jedoch begrenzt durch die elastische Maximaldehnung der verwendeten Folien. Da außerdem bei großer Ausdehnung die Kissen eine Kugelform anstreben, was für die Unterstützung der Lordose ungünstig ist, werden häufig mehrere derartige Kissen übereinander in der Sitzlehne angeordnet. Das erhöht den Montageaufwand und die Kosten.

In der US 455 5140 A ist ein Fahrzeugsitz offenbart, bei dem der Sitz und die Lehne jeweils als Blasformteil ausgebildet sind, wobei auch Sitz- und Lehnenkissen mit angeformt werden.

Dieses Verfahren erfordert einerseits sehr große Werkzeuge, andererseits ist aufgrund der aktuellen Forderungen nach Stabilität der Einsatz von Kunststoffen als Rahmen der Sitze nicht immer möglich.

Die angeformten Sitz- und Lehnenkissen sind zwar auf das jeweilige Fahrergewicht und das Komfortempfinden einstellbar, eine für eine Lordosestütze geeignete, örtlich individuell und vom Fahrergewicht unabhängige Einstellung ist damit jedoch nicht erreichbar.

Die US 623 11 25 B1 offenbart einen Sitz aus Stahlrohr, der mit netzartigen Bespannung an der Sitz- und Lehnenfläche ausgebildet ist. Unterhalb der Sitzbespannung ist eine Art Puffer als Kissen ausgebildet, welches bei Einfederung durch das Fahrergewicht die Sitzbespannung unterstützen soll. Auch die Anordnung einer Lordosestütze wird vorgeschlagen, aber nicht näher offenbart.

In der DE 2006 059 540 A1 ist ein Fahrzeugsitz mit Lordosekissen offenbart, bei dem das Lordosekissen eine Einschnürung aufweist. Diese Einschnürung führt dazu, dass im Bereich der Einschnürung beim Aufblasen des Lordosekissens die Einschnürung eine geringere Ausdehnung erfährt als der Kissenbereich außerhalb der Einschnürung.

Auch bei dieser Lösung erfährt das Lordosekissen seine gewünschte dreidimensionale Form erst beim aufblasen, da auch hier eine flächige Grundkonstruktion vorliegt.

Der Erfindung lag die Aufgabe zugrunde, ein Lordosekissen zu schaffen, welches eine hohe Ausdehnung bei geringen Abmessungen im Grundzustand ermöglicht.

Diese Aufgabe wird dadurch gelöst, dass die Außengeometrie des Lordosekissens eine Abfolge von ringförmig geschlossenen, nach innen gerichteten Nuten und ringförmig geschlossenen, nach außen gerichteten Stegen aufweist, wobei ein erster Nutenring einen größeren Umfang aufweist, als ein erster Stegring und folgend jeder weitere Nutring einen kleineren Umfang hat, als der vorhergehende Stegring, sodass Nut- und Stegringe ineinander liegen.

Durch diese Anordnung bildet die Außenhaut des Kissens ineinander angeordnete Ringwellen, die die Oberfläche der Außenhaut vergrößern, sodass beim Aufblasen des Kissens größere Ausbauchungen erreichbar sind, da sich die Wellenform quasi wie ein Teleskop auseinander schieben kann. Dadurch ist mit einem derartigen Kissen eine verbesserte Höhe in aufgeblasenem Zustand erreichbar.

Der Erfindung lag weiterhin die Aufgabe zugrunde, ein Verfahren zur Herstellung von eingangs geschilderten Lordosekissen zu schaffen, mit dem die Geometrie des Lordosekissens besonders einfach herstellbar ist.

Diese Aufgabe wird dadurch gelöst, dass mittels Extrusionsblastechnik ein Kissenrohling erzeugt wird, der in ein Blaswerkzeug vorbestimmter Form eingebracht wird und in dem Blaswerkzeug durch Aufblasen eine zur Form des Blaswerkzeugs korrespondierende Außengeometrie erhält.

Auf diese Weise ist in einem kombinierten Arbeitsverfahren eine große Vielfalt an Geometrien erzeugbar. Durch die vorgeformte Geometrie weisen derartige Kissen bereits eine gewisse dreidimensionale Ausdehnung auf, die größer ist, als bei Kissen aus zusammengeschweißten Folien. Dies hat zur Folge, dass die maximal erreichbare Ausdehnung gegebenenfalls ausreicht, um die Anzahl der übereinander anzuordnenden Kissen in der Sitzlehne zu reduzieren.

In einer Weiterbildung der Erfindung wird bei der Formgebung in der Blasform ein Luftanschlussstutzen mit angeformt.

Ein derartiger Stutzen ermöglicht eine sehr einfache Anbringung eines Lufteinleitungsschlauches.

In einer Weiterbildung der Erfindung wird bei der Formgebung in der Blasformen ein bereitgestellter Lufteinleitungsschlauch in einem Arbeitsgang an den Anschlussstutzen mit angeschweißt.

Bei Wahl aufeinander abgestimmt Werkstoffe lässt sich der extrusionsblasgeformte Kissenrohling mit Anschlussstutzen bei Kontakt mit dem in die Blasformen eingelegten Lufteinleitungsschlauch verschweißen, beispielsweise wenn der Schmelzpunkt des Schlauches so abgestimmt ist, dass er bei Kontakt mit dem heißen Kissenrohling angeschmolzen und mit dem Anschlussstutzen des Kissenrohlings verschweißt wird.

Anhand der Zeichnung wird nachstehend ein Ausführungsbeispiel der Erfindung näher erläutert.

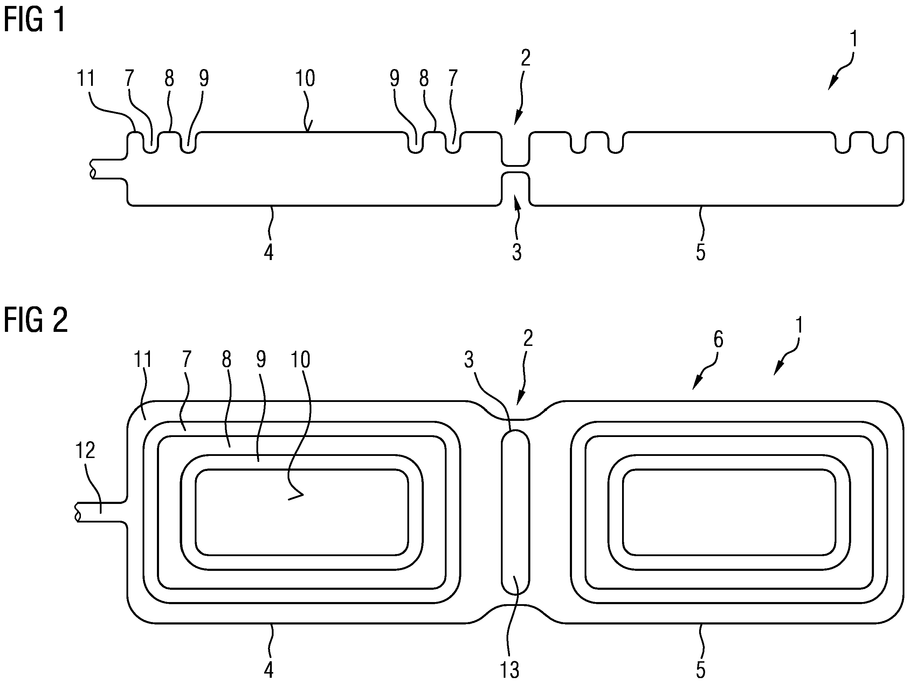

Die Fig. 1 zeigt im Querschnitt ein mit dem erfindungsgemäßen Verfahren erzeugtes Lordosekissen 1, welches als Lordosestütze für einen nicht gezeigten Fahrzeugsitz vorgesehen ist. Das Lordosekissen 1 weist etwa in seiner Mitte 2 eine Einschnürung 3 auf. Die Einschnürung 3 teilt das Lordosekissen 1 quasi in 2 Hälften 4 und 5. An seiner einem auf dem nicht gezeigten, ebenfalls nicht dargestellten Fahrer zugeordneten Seite 6 weist jede Hälfte 4 und 5 des Lordosekissens 1 jeweils eine erste, in das Innere der jeweiligen 4 und 5 Lordosekissenhälfte 4 und 5 gerichtete, ringförmig geschlossenen Nut 7 und einen ersten Steg 8 auf, der ebenfalls ringförmig geschlossen ist. Auf den Steg 8 folgt eine weitere ringförmig geschlossene Ringnut 9.

Zur Vereinfachung der Darstellung ist hier nur eine Lordosekissenhälfte 4 mit entsprechenden Bezugszeichen gekennzeichnet. Im folgenden wird die Beschreibung des Ausführungsbeispiels auf eine Lordosekissenhälfte, hier Bezugszeichen 4, beschränkt. Für die zweite Lordosekissenhälfte gelten sinngemäß die gleichen Beschreibungen.

Die Lordosekissenhälfte 4 weist etwa mittig eine Kissenaußenfläche 10 auf, die von den Ringnuten 7 und 9 und dem Steg 8 umschlossen ist. Am Außenrand weist die Lordosekissenhälfte 4 einen Abschlusssteg 11 auf.

In der Fig. 2 ist das Lordosekissen 1 mit der geschilderten Geometrie in einer Draufsicht gezeigt. Hier sichtbar ist die dem genannten, nicht gezeigten Fahrer zugewandte Seite 6 des Lordosekissens 1. In dieser Darstellung ist zu erkennen, dass sich die Einschnürung 3 nicht über die gesamte Breite des Lordosekissens 1 erstreckt, wobei die Einschnürung 3 in ihrem Grund 13 die hier sichtbare Seite 6 des Lordosekissens 1 mit der in dieser Darstellung unter der Seite 6 liegenden, nicht sichtbaren Unterseite des Lordosekissens 1 fest verbunden ist, sodass bei einem aufblasen des Lordosekissens 1 die Einschnürung 3 als solche erhalten bleibt.

Vom Außenrand, der durch den Abschlusssteg 11 gebildet wird, ist die Einschnürung 3 um ein vorbestimmtes Maß beabstandet. Dies dient dazu, dass in das Lordosekissen 1 eingeleitete Druckluft in beide Lordosekissenhälften 4 und 5 Einströmen kann.

Die Lordosekissenhälfte 4 weist an der von der Einschnürung 3 abgewandten Seite einen mit dem erfindungsgemäßen Verfahren erzeugten, einstückig mit dem Lordosekissen 1 ausgebildeten Luftanschlussstutzen 12 auf, an den ein nicht gezeigter Luftanschlussschlauch anschweißbar ist.

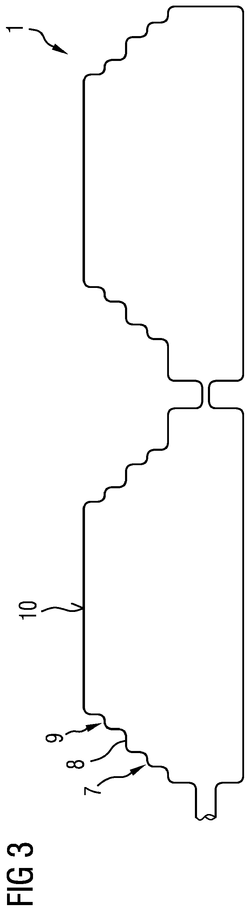

In der Fig. 3 ist das Lordosekissen 1 in aufgeblasenem Zustand gezeigt. Dies dient zur Verdeutlichung des vorteilhaften Funktionsprinzips und entspricht nicht dem Zustand, den das Lordosekissen 1 nach seiner Fertigstellung aufweist, in dem es in einen nicht gezeigten Fahrersitz eingebaut wird. Der Einbauzustand entspricht dem Zustand des Lordosekissens 1 gemäß der Fig. 1.

Im Bereich der ehemaligen Nuten 7 und 9 sind der ehemalige Steg 8 und die Kissen Außenfläche 10 nach außen gestülpt. Das in den ehemaligen Nuten 7 und 9 zur Verfügung stehende Kissenmaterial nun quasi die äußere, ringförmige Begrenzung des ausgestülpten Lordosekissens 1. Es erlaubt eine Ausstülpung in nennenswertem Maß, wobei die Ausstülpungshöhe im wesentlichen von der Geometrie und Anzahl der Nuten und weniger von der Dehnbarkeit des Kissenmaterials abhängig ist. Auf diese Weise ist eine hohe Ausstülpung erreichbar, sodass gegebenenfalls die die Anzahl der für eine vorbestimmte Kissenhöhe notwendigen übereinandergelegten Lordosekissen reduzierbar ist.

### Bezugszeichenliste

### (Teil der Beschreibung)

- 1: Lordosekissen
- 2: Mitte des Lordosekissens 1
- 3: Einschnürung des Lordosekissens 1
- 4, 5: Hälften des Lordosekissens 1
- 6: einem Fahrer zugeordnete Seite des Lordosekissens 1
- 7, 9: ringförmig geschlossene Nuten
- 8: ringförmig geschlossener Steg
- 10: Kissenaußenfläche
- 11: Abschlusssteg
- 12: Luftanschlussstutzen
- 13: Grund der Einschnürung 3

## Patentansprüche

1. Lordosekissen (1), **dadurch gekennzeichnet, dass** die Außengeometrie des Lordosekissens (1) eine Abfolge von ringförmig geschlossenen, nach innen gerichteten Nuten (7, 9) und ringförmig geschlossenen, nach außen gerichteten Stegen (8) aufweist, wobei ein erster Nutenring (7) einen größeren Umfang aufweist, als ein erster Stegring (8) und folgend jeder weitere Nutring (9) einen kleineren Umfang hat, als der vorhergehende Stegring (8), sodass Nut- und Stegringe (7, 8, 9) ineinander liegen.

2. Verfahren zur Herstellung eines Lordosekissens (1), **dadurch gekennzeichnet, dass** mittels Extrusionsblastechnik ein Kissenrohling erzeugt wird, der in ein Blaswerkzeug vorbestimmter Form eingebracht wird und in dem Blaswerkzeug durch Aufblasen eine zur Form des Blaswerkzeugs korrespondierende Außengeometrie erhält.

3. Verfahren nach Anspruch 2, **dadurch gekennzeichnet, dass** der Formgebung in der Blasform ein Luftanschlussstutzen (12) mit angeformt wird.

4. Verfahren nach Anspruch 3, **dadurch gekennzeichnet, dass** bei der Formgebung in der Blasformen ein bereitgestellter Lufteinleitungsschlauch in einem Arbeitsgang an den Anschlussstutzen (12) mit angeschweißt wird.
